# DEMANDE DE BREVET EUROPEEN

(11) **EP 0 794 347 A1**
(43) Date de publication de la demande: **10.09.1997**
(21) Numéro de dépôt: 97400315.4
(22) Date de dépôt: 12.02.1997
(51) Int. Cl.: F16D 3/84, B25B 27/28

(54) **Soufflet de protection pour transmission**

(30) Priorité: 07.03.1996 FR 9602876
(71) Demandeur: Bouquerel, Gilles, 95370 Montigny-Les-Cormeilles (FR); Canovas, Dominique, 89400 Bassou (FR)
(72) Inventeur: Bouquerel, Gilles, 95370 Montigny-Les-Cormeilles (FR); Canovas, Dominique, 89400 Bassou (FR)
(74) Mandataire: L'Helgoualch, Jean

(57) **Abrégé**

L'invention concerne un soufflet extensible de protection pour transmission.

Le soufflet de protection pour transmission est constitué par un corps tubulaire tronconique en matière souple, ouvert à ses deux extrémités, comportant deux parties extrêmes présentant des surfaces susceptibles de porter un dispositif de fixation, et une partie centrale présentant des plis successifs, chaque pli (7) étant formé de deux pans séparés (8, 9) par une zone de jonction (10); le pan (8) du côté de la petite base (3) du soufflet est incliné par rapport à l'axe du soufflet d'un angle compris entre 50 et 70°, et le pan du côté de la grande base (2) d'un angle compris entre 130 et 140°. Il comporte une surface annulaire d'appui (4) au niveau de sa petite base (3) et plusieurs surfaces annulaires d'appui (5a, 5b, 5c), de diamètres différents, à proximité de la grande base (2), chaque surface annulaire étant renforcée par une nervure interne (11).

Application notamment dans le domaine de la mécanique automobile.

## Description

La présente invention concerne un soufflet de protection, et notamment un soufflet extensible de protection pour transmission, utilisable plus particulièrement dans le domaine des véhicules automobiles.

Dans le domaine des transmissions de moteurs automobiles, on utilise couramment des soufflets de protection, généralement en caoutchouc, destinés à protéger les joints de sortie de boites de vitesses, de manière à isoler la transmission et les lubrifiants de l'extérieur, et à les protéger contre l'humidité et les éléments étrangers susceptibles d'entraîner diverses dégradations.

L'un des principaux inconvénients dans ce domaine technique tient à la grande disversité des joints et des soufflets de protection, ce qui oblige les équipementiers ainsi que les professionnels chargés des réparations, à disposer d'un stock important de pièces détachées de caractéristiques très diverses, adaptées aux nombreux modèles existants. Ainsi, il n'est pas rare qu'un réparateur automobile se trouve dans l'obligation de détenir constamment en stock plus de 50 modèles de soufflets de protection afin de pouvoir répondre à une demande importante provenant de la nécessité de remplacer régulièrement, et généralement tous les deux ou trois ans, les soufflets de transmission des véhicules automobiles.

Ce problème se trouve encore plus difficile à résoudre pour les grossistes en pièces détachées de mécanique automobile, qui doivent être en mesure de répondre en permanence aux demandes d'approvisionnement des réparateurs et doivent en conséquence maintenir des stocks importants, souvent supérieurs à plus de cent modèles de soufflets de transmission.

Il existe donc un besoin de pouvoir disposer, dans ce domaine technique, de soufflets de protection de transmission susceptibles de s'adapter sur des modèles différents de transmission, afin de réduire l'importance des stocks maintenus chez les grossistes en pièces détachées et les réparateurs automobiles, et de pouvoir procéder à des opérations de réparation et de maintenance sur divers modèles de véhicules automobiles en utilisant un nombre aussi réduit que possible de soufflets de protection.

Le brevet EP-A-403.163 décrit un soufflet de protection pour joint, se plaçant autour d'un joint lubrifié et se présentant sous forme d'un corps tronconique, comportant des rainures annulaires reliées entre elles par des parties d'ajustement présentant une forme courbée particulière, afin de permettre une flexion axiale d'une partie du soufflet. Des brides de serrage, entourant la face externe de chacune des deux parties extrêmes du corps tronconique, assurent la fixation sur le joint.

Le brevet DE-A-2.205.798 décrit un soufflet pour joint de cardan pour automobile destiné à procurer une bonne étanchéité.

Le brevet EP-A-425.865 décrit un soufflet dont les deux extrémités sont renforcées au moyen d'une augmentation de l'épaisseur de la paroi, et dont les plis sont séparés par une nervure.

Cependant, tous ces soufflets de type connu sont soumis à des conditions difficiles d'utilisation. Ainsi, ils subissent fréquemment des dégradations provenant par exemple des chocs et des vibrations en cours de fonctionnement, et il est alors nécessaire de les remplacer à intervalles de temps relativement rapprochés, par exemple tous les deux ou trois ans. En particulier, leur mise en place, notamment dans le cas de la réparation automobile, est souvent délicate. D'autre part, un même soufflet de protection du type des soufflets connus rappelés ci-dessus ne peut convenir qu'à un modèle particulier de joint, si bien que les utilisateurs, tels que les réparateurs automobiles, doivent toujours disposer d'un nombre important de modèles de soufflets de protection.

La présente invention a pour objet un soufflet extensible de protection pour transmission, notamment pour transmission de moteur de véhicule automobile. Plus particulièrement, l'invention a pour objet un soufflet extensible de type tronconique adaptable à divers modèles de joints de transmission, et par conséquent un soufflet de protection susceptible de se substituer à plusieurs modèles classiques de soufflets de type connu, en pouvant s'adapter à des joints de transmission de formes et modèles divers.

La présente invention a également pour objet un dispositif pour la mise en place du soufflet de protection.

Le soufflet extensible de protection de transmission suivant l'invention s'adresse tout particulièrement aux professionnels de la réparation automobile, pour le remplacement de joints usuels dégradés.

Le soufflet de protection pour transmission suivant la présente invention est du type constitué par un corps tubulaire tronconique en matière souple, ouvert à ses deux extrémités, comportant deux parties extrêmes présentant des surfaces susceptibles de porter un dispositif de fixation, et une partie centrale présentant des plis successifs, chaque pli convexe étant formé de deux pans séparés par une zone de jonction. Suivant une caractéristique de l'invention, les pans de chaque pli, de forme convexe, sont disposés de telle sorte que le pan du côté de la petite base du soufflet est incliné par rapport à l'axe du soufflet d'un angle compris entre 50 et 70°, et le pan du côté de la grande base est incliné d'un angle compris entre 130 et 140°.

Suivant une forme de réalisation de l'invention, il est préférable que chaque surface annulaire d'appui soit renforcée par au moins une nervure interne formée à la surface interne du soufflet, dans un plan perpendiculaire à l'axe du soufflet, et de préférence deux nervures parallèles. Une nervure externe peut aussi être prévue sur la surface externe du soufflet, de préférence en bordure de chaque surface d'appui, afin de servir de butée facilitant la mise en place d'une bride de fixation. Suivant une forme particulière de réalisation, le sommet de la nervure interne présente une forme concave.

Suivant une caractéristique additionnelle de la présente invention, la zone de jonction entre les deux pans de chaque pli est arrondie suivant un rayon de courbure compris entre 0,5 et 1,5 fois la largeur moyenne de chaque pan.

De plus, les plis se raccordent entre eux suivant un arrondi concave dont le rayon de courbure est compris entre 0,5 et 1 fois, de préférence entre 0,6 et 0,8 fois, le rayon de courbure de la zone de jonction entre deux pans d'un même pli.

Le soufflet de forme générale tronconique de l'invention est réalisé de préférence en une matière souple telle que du caoutchouc synthétique ou du caoutchouc naturel contenant divers additifs usuels destinés à en renforcer les propriétés mécaniques. De plus, il présente une épaisseur sensiblement uniforme depuis la petite base jusqu'à la grande base, et comporte plusieurs zones d'appuis destinées à recevoir des dispositifs de fixation sur le joint ou la pièce à protéger. Conformément à une forme avantageuse de réalisation, le soufflet comporte une surface annulaire d'appui au niveau de sa petite base et plusieurs surfaces annulaires d'appui successives, de diamètres différents, à proximité de la grande base, et il est conçu de manière à pouvoir être aisément découpé à la limite de ces surfaces annulaires d'appui.

Il est particulièrement avantageux de prévoir, de part et d'autre des surfaces d'appui, une zone de raccordement avec les pans des plis adjacents présentant une forme arrondie, avec un rayon de courbure sensiblement égal au rayon de courbure du raccordement de deux plis successifs, mais avec un angle plus large.

Cette forme de réalisation du soufflet extensible de l'invention permet de concevoir un dispositif de mise en place simple et efficace, se présentant sous la forme d'un cône nervuré spécialement adapté.

Suivant une forme préférentielle de réalisation, les rainures longitudinales s'étendent sur les 3/4 environ de la longueur du cône, et elles sont espacées les unes par rapport aux autres d'un angle de 15° environ.

Les caractéristiques et avantages de la présente invention apparaîtront plus en détail dans l'exemple ci-après relatif à une forme préférentielle et non limitative de réalisation, en référence aux dessins annexés, qui représentent :

Figure 1 : une vue en coupe longitudinale d'un soufflet de protection conforme à la présente invention.

Figure 2 : une vue agrandie en coupe d'un détail de la Figure 1.

Figure 3 : une vue de côté, en demi-coupe, d'un dispositif pour la mise en place d'un soufflet conforme à la présente invention.

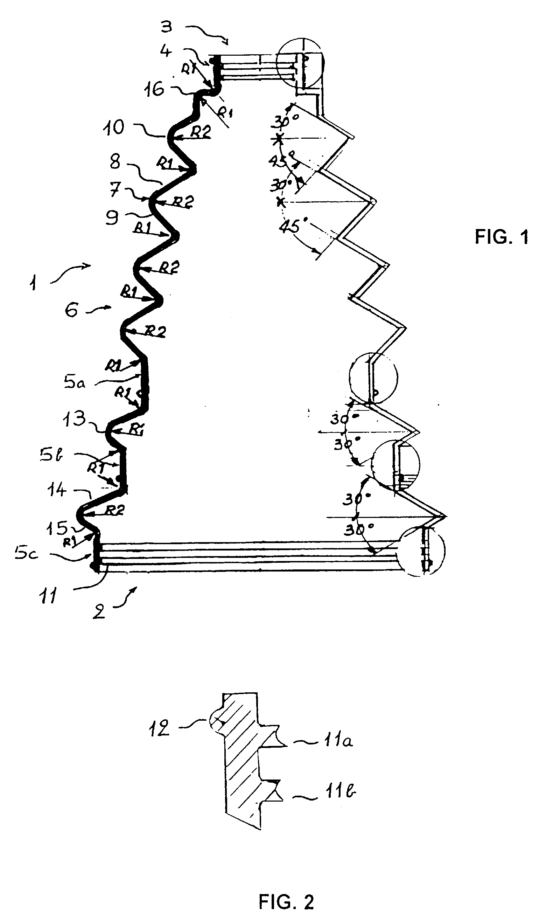

Le soufflet (1) représenté sur la Figure 1 est de forme générale tronconique à section circulaire, comprenant une grande base (2) et une petite base (3).

Le soufflet (1) est réalisé intégralement en caoutchouc d'épaisseur sensiblement uniforme depuis la grande base (2) jusqu'au sommet de la petite base (3) . Dans l'exemple représenté sur la Figure 1, l'épaisseur du soufflet est égale à environ 2 mm. Le soufflet est ouvert à chacune de ses deux bases, et comporte une surface annulaire d'appui (4) près de l'ouverture de la petite base (3), et plusieurs surfaces annulaires d'appui (5a, 5b, 5c) à proximité de l'ouverture de la grande base (2). Ces surfaces annulaires d'appui (4) et (5) présentent une surface extérieure plane cylindrique sensiblement parallèle à l'axe central du cône (1), pouvant recevoir une bride ou un circlip de fixation (non représenté) assurant la solidarisation avec le joint de transmission sur lequel le soufflet (1) doit être adapté.

Les trois surfaces d'appui (5a), (5b) et (5c) correspondent à des diamètres d'ouverture différents du cône, par exemple 56, 68 et 82 mm, respectivement, tandis que le diamètre du cône au niveau de la surface d'appui (4) de la petite base (3) est, par exemple, de 19 mm. Le soufflet (1) peut être découpé simplement à proximité immédiate des surfaces (5b) ou (5c) afin d'adapter l'ouverture de la grande base au diamètre de la pièce sur laquelle le soufflet doit s'adapter, par exemple une sortie de boîte de vitesses de véhicule automobile ou un cardan de transmission.

Comme le montre la Figure 1, les parties extrêmes du soufflet (1), c'est-à-dire la grande base (2) et la petite base (3), sont reliées par la partie centrale (6) du soufflet dont la paroi forme plusieurs plis successifs (7) permettant la compression et l'extension du soufflet ainsi qu'une flexion de part et d'autre de son axe. Chaque plis successif comporte deux pans séparés par une zone de jonction arrondie. Le premier pan (8) est situé du côté de la petite base (3) du soufflet, tandis que le deuxième pan (9) est situé du côté de la grande base (2) par rapport à la jonction arrondie (10) des deux pans.

En position de repos, c'est-à-dire lorsque le soufflet (1) n'est soumis à aucune force de compression, d'extension ou de torsion, il possède la forme représentée sur la Figure 1, où la partie centrale (6) du soufflet comprend quatre plis, chaque pli comportant, du côté de la petite base (3), un premier pan (8) incliné à 60° par rapport à l'axe central du soufflet et, du côté de la grande base (2), un deuxième pan (9) incliné à 135°, les deux pans se raccordant par une zone de jonction annulaire arrondie (10) dont le rayon de courbure R₂ est égal à environ la largeur moyenne des deux pans, c'est-à-dire environ 10 mm.

Les plis (7) se raccordent entre eux par une zone arrondie concave dont le rayon de courbure R₁ est légèrement inférieur à R₂, c'est-à-dire dans cet exemple environ 8 mm. Les raccordements des surfaces d'appui (5) avec les pans des plis adjacents se font avec une courbure de même rayon R₁ mais un angle plus large.

Chaque zone annulaire d'appui (4) et (5) est renforcée par deux nervures internes (11) parallèles formées à la surface interne du soufflet (1), dans un plan perpendiculaire à l'axe du soufflet. La forme de ces nervures internes est explicitée sur la Figure 2, montrant deux nervures (11a) et (11b) séparées par un espace de largeur égale à environ 1,6 fois l'épaisseur de chaque nervure. De plus, une nervure externe (12) est formée sur la surface du soufflet, en bordure de la zone annulaire d'appui.

Les trois surfaces annulaires d'appui (5) situées du côté de la grande base (2) sont séparées les unes des autres par un seul pli (13) dont le pan (14) situé du côté de la petite base est identique, en dimensions et en orientation, au pan (8) des plis de la partie centrale (6), tandis que l'autre pan (15), du côté de la grande base (2) est incliné d'un angle de 120° par rapport à l'axe du soufflet, et présente une largeur égale à environ le tiers de celle du premier pan (14).

Comme le montre la Figure 1, le soufflet comporte encore un épaulement (16) entre la petite base (3) et le premier pli de la partie centrale (6). Cet épaulement présente deux faces annulaires dont l'une est perpendiculaire et l'autre parallèle à l'axe du soufflet, et se rejoignent par un arrondi dont le rayon de courbure est sensiblement égal à celui de la zone de jonction (10) entre les deux pans d'un même pli.

On constate ainsi que le soufflet représenté sur les dessins annexés, relatifs à une forme de réalisation de l'invention, possède une épaisseur uniforme, et les divers pans formant les plis se raccordent entre eux ou avec les surfaces d'appui suivant seulement deux types d'arrondis.

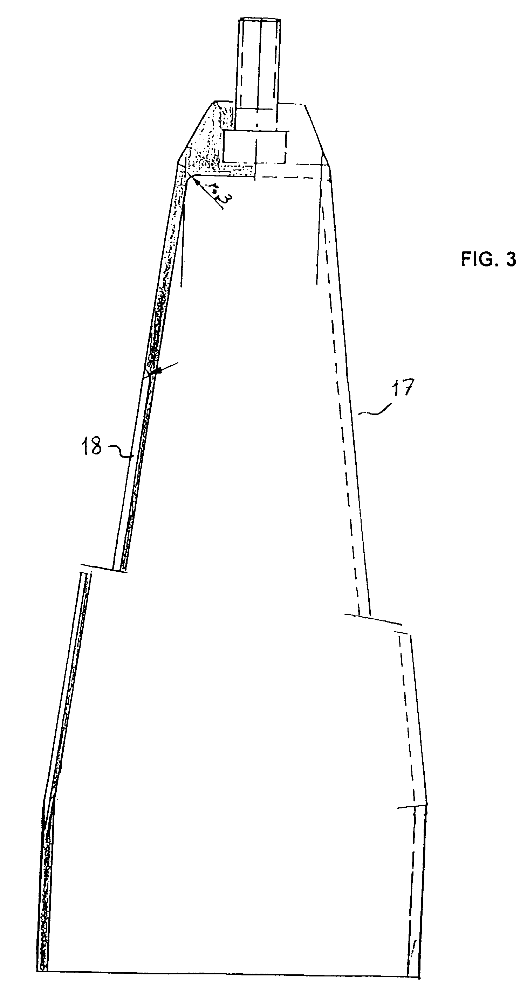

Le dispositif de mise en place du soufflet extensible représenté sur la Figure 1 est représenté en demi-coupe tronquée et en vue de côté sur la Figure 3.

Sur cette figure, on voit que le dispositif se présente sous la forme d'un cône (17) creux sur la surface duquel sont prévues des rainures (18) longitudinales, s'étendant sur les ¾ environ de la longueur du cône. L'intervalle angulaire entre deux nervures consécutives est d'environ 15°.

La mise en place se fait aisément en disposant le dispositif (17) sur la pièce mécanique de transmission qui doit recevoir le soufflet extensible, la petite base étant du côté de l'utilisateur, après avoir de préférence appliqué une couche de graisse mécanique de type usuel sur la surface du cône afin de faciliter le glissement du soufflet, puis on fait glisser le soufflet sur le cône. L'élasticité du soufflet dans toutes les directions permet de retirer le cône, en déformant provisoirement le soufflet une fois sa grande base fixée sur son support.

Les rainures longitudinales (18) permettent d'éviter un phénomène d'aspiration et de retenue d'air qui s'opposerait au mouvement du soufflet glissant sur le cône, en laissant l'air s'échapper par les rainures.

## Revendications

1. Soufflet de protection pour transmission, constitué par un corps tubulaire tronconique en matière souple, ouvert à ses deux extrémités, comportant deux parties extrêmes présentant des surfaces susceptibles de porter un dispositif de fixation, et une partie centrale présentant des plis succesifs, chaque pli (7) étant formé de deux pans séparés (8, 9) par une zone de jonction (10), caractérisé en ce qu'il comporte une surface annulaire d'appui (4) au niveau de sa petite base (3) et plusieurs surfaces annulaires d'appui successives (5a, 5b, 5c), de diamètres différents, à proximité de la grande base (2), chaque surface annulaire d'appui étant renforcée par au moins une nervure interne (11) formée à la surface interne du soufflet, dans un plan perpendiculaire à l'axe du soufflet, et en ce que le pan (8) du côté de la petite base (3) du soufflet est incliné par rapport à l'axe du soufflet d'un angle compris entre 50 et 70°, et le pan du côté de la grande base (2) d'un angle compris entre 130 et 140°.

2. Soufflet de protection pour transmission selon la revendication 1, caractérisé en ce que la zone de jonction (10) entre les deux pans de chaque pli (7) est arrondie suivant un rayon de courbure compris entre 0,5 et 1,5 fois la largeur moyenne de chaque pan.

3. Soufflet de protection pour transmission selon la revendication 2, caractérisé en ce que les plis se raccordent entre eux suivant un arrondi concave dont le rayon de courbure est compris entre 0,5 et 1 fois le rayon de courbure de la zone de jonction entre deux pans d'un même pli.

4. Soufflet de protection pour transmission selon la revendication 1, caractérisé en ce qu'il comporte une zone de raccordement (13) entre les surfaces annulaires d'appui et les pans des plis adjacents, présentant une forme arrondie, avec un rayon de courbure sensiblement égal au rayon de courbure du raccordement de deux plis successifs

5. Soufflet de protection pour transmission selon l'une quelconque des revendications précédentes, caractérisé en qu'il présente une épaisseur sensiblement uniforme depuis la petite base jusqu'à la grande base.

6. Dispositif pour la mise en place d'un soufflet de protection pour transmission selon l'une quelconque des revendications précédentes, caractérisé en ce qu'il est constitué par un cône creux portant en surface des rainures longitudinales.

7. Dispositif selon la revendication 6, caractérisé en ce que les rainures longitudinales s'étendent sur les 3/4 environ de la longueur du cône.

8. Dispositif selon l'une quelconque des revendications 6 et 7, caractérisé en ce que les rainures longitudinales sont espacées les unes par rapport aux autres d'un angle de 15° environ.
